**Europäisches Patentamt**

**European Patent Office**

**Office européen des brevets**

(19)

(11) Veröffentlichungsnummer: **0 093 965**

**B1**

(12) **EUROPÄISCHE PATENTSCHRIFT**

(45) Veröffentlichungstag der Patentschrift:
13.01.88

(51) Int. Cl.⁴: **D 01 F 6/76**, **C 08 L 61/28**,
**C 08 G 12/40**

(21) Anmeldenummer: 83104168.6

(22) Anmeldetag: 28.04.83

| E R R A T U M |

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
|---|---|---|---|---|
| Alkaliformaldehydsulfoxiat | 2 | 22 | | Alkaliformaldehydsulfoxilat |
| Wasseraufname Fähigkeit | | 44 | | Wasseraufnahmefähigkeit |
| Als Paraformaldehyd oder Trioxan geeignet. | | 58 | | Als Ausgangsstoffe sind auch polymere Formen der Aldehyde wie Paraformaldehyd oder Trioxan geeignet. |
| Geeignet Vorkondensate | | 60 | | Geeignete Vorkondensate |

$$= \frac{0{,}5}{\dfrac{F}{M}} \cdot \frac{I_o\ (950 \text{ bis } 1050 \text{ cm}^{-1})}{I_o\ (ca.\ 810 \text{ cm}^{-1})}$$

3
4

35/40
54/58

$$= \frac{0{,}5}{\dfrac{F}{M}} \cdot \frac{I_o\ (950 \text{ à } 1050 \text{ cm}^{-1})}{I_o\ (ca.\ 810 \text{ cm}^{-1})}$$

| | | | | |
|---|---|---|---|---|
| 1,6 Mol Melanin | | 58 | | 1,6 Mol Melamin |
| (gemessen bei 25°) | | 61 | | (gemessen bei 25°C) |
| Hierdurch werden die Fäden aus kondensiert und vernetzt. Die Eigenschaften der aus gehärteten Fäden | 4 | 16/17 | | Hierdurch werden die Fäden auskondensiert und vernetzt. Die Eigenschaften der ausgehärteten Fäden |
| Verfahren nach den Ansprüchen 1 bis 4 | 5 | 06 | | Verfahren nach den Ansprüchen 1 bis 3 |

Tag der Entscheidung über die Berichtigung
Date of decision on rectification:
Date de décision portant sur modification:
) 25.03.88
) ..................

Ausgabe- und Veröffentlichungstag:
Issue and publication date:
Date d'edition et de publication:
) 25.05.88
) ..................

Patbl.Nr.)
) 88/21
EPB no:) .........

Bull. no:)

**Europäisches Patentamt**

**European Patent Office**

**Office européen des brevets**

(19)

(11) Veröffentlichungsnummer: **0 093 965**
**B1**

(12) **EUROPÄISCHE PATENTSCHRIFT**

(45) Veröffentlichungstag der Patentschrift:
**13.01.88**

(51) Int. Cl.⁴: **D 01 F 6/76,** C 08 L 61/28,
C 08 G 12/40

(21) Anmeldenummer: **83104168.6**

(22) Anmeldetag: **28.04.83**

(54) **Verfahren zur Herstellung von Fäden und Fasern, die zu mindestens 80 Gew. % aus Melamin-Formaldehydkondensaten bestehen.**

(30) Priorität: **06.05.82 DE 3216927**

(43) Veröffentlichungstag der Anmeldung:
**16.11.83 Patentblatt 83/46**

(45) Bekanntmachung des Hinweises auf die Patenterteilung:
**13.01.88 Patentblatt 88/2**

(84) Benannte Vertragsstaaten:
**AT BE CH DE FR GB IT LI NL**

(56) Entgegenhaltungen:
**EP-A-0 005 905**
**FR-A-2 217 440**
**FR-A-2 298 562**
**FR-A-2 373 617**

(73) Patentinhaber: **BASF Aktiengesellschaft, Carl-Bosch- Strasse 38, D-6700 Ludwigshafen (DE)**

(72) Erfinder: **Matthies, Hans- Georg, Dr., Homburger Strasse 2, D-6700 Ludwigshafen (DE)**
Erfinder: **Mahnke, Harald, Dr., Osloer Weg 48, D-6700 Ludwigshafen (DE)**
Erfinder: **Woerner, Frank Peter, Dr., Am Altenbach 18, D-6706 Wachenheim (DE)**

EP 0 093 965 B1

**Beschreibung**

Gegenstand der Erfindung ist ein Verfahren zur Herstellung von nicht brennenden und nicht schmelzenden Fäden und Fasern mit hoher Bruchdehnung, die mindestens zu 80 Gew.-% aus Melamin-Formaldehydkondensaten bestehen, wobei man eine 65 bis 85 gew.-%-ige wäßrige Lösung eines Vorkondensats, das mindestens zu 80 Gew.-% aus Melamin und Formaldehyd im Molverhältnis Melamin zu Formaldehyd von 1 : 1,5 bis 1 : 4 aufgebaut ist und zusätzlich bis zu 20 Gew.-% andere amino-, amid-, hydroxyl- oder carboxylgruppenhaltige Duroplastbildner einerseits und Aldehyde andererseits einkondensiert enthalten kann, in eine erhitzte Atmosphäre verspinnt, das Wasser verdampft und das Vorkondensat bei erhöhter Temperatur aushärtet.

Aus der DE-AS 23 64 091 ist bekannt, daß man Fäden aus Melamin-Formaldehydvorkondensaten durch Verspinnen in einer erhitzten Atmosphäre unter Verdampfen des Lösungsmittels erhält. Eine ausreichende Spinngeschwindigkeit läßt sich jedoch nur erzielen durch zusätzliches Zumischen von anderen faserbildenden Polymeren, z. B. Polyvinylalkohol. Ohne Zusatz von Polyvinylalkohol ist beispielsweise ein Aufwickeln der ersponnenen Fäden nicht möglich. Selbst bei Zusätzen von weniger als 10 Gew.-% Polyvinylalkohol treten noch soviele Faserbrüche aus, daß eine gewerbliche Verwertung nicht möglich erscheint. Durch den Zusatz von anderen faserbildenden Polymeren wird jedoch die Verwendung solcher Fäden für selbstverlöschende Gegenstände beeinträchtigt, da bei Einwirken von Flammen mit einer erheblichen Rauchentwicklung und Eigenbrennbarkeit zu rechnen ist.

Aus der FR-A 23 73 617 ist ein Verfahren zur Herstellung von Fasern für die Bereitung von Papier bekannt, bei dem eine wäßrige Lösung eines aus Harnstoff und Formaldehyd aufgebauten Vorkondensats unter Zusatz von 1 bis 20 Gew.-% Alkalisulfit, Alkaliphosphat odet Alkaliformaldehydsulfoxiat bei 50°C versponnen wird, die Fasern bei 60°C getrocknet und bei 120°C ausgehärtet werden.

Es war deshalb die technische Aufgabe gestellt, nicht brennende und nicht schmelzende Fäden und Fasern mit hoher Bruchdehnung auf Basis Melamin-Formaldehyd-Kondensaten zur Verfügung zu stellen, die sich ohne Zusatz von weiteren faserbildenden Polymeren mit erhöhter Geschwindigkeit verspinnen lassen.

Diese Aufgabe wird gelöst in einem Verfahren zur Herstellung von nicht brennenden und nicht schmelzenden Fäden und Fasern mit hoher Bruchdehnung, die mindestens zu 80 Gew.-% aus Melamin-Formaldehydkondensaten bestehen, wobei man eine 65 bis 85 gew.-%-ige wäßrige Lösung eines Vorkondensatzs, das mindestens zu 80 Gew.-% aus Melammin und Formaldehyd im Molverhältnis Melamin : Formaldehyd von 1 : 1,5 bis 1 : 4 aufgebaut ist und zusätzlich bis 20 Gew.-% andere amino-, amid-, hydroxyl-, oder carboxylgruppenghaltige Duroplastbildner einerseits und Aldehyde andererseits einkondensiert enthalten kann in eine erhitzte Atmosphäre verspinnt, das Wasser verdampft und das Vorkondensat bei erhöhter Temperatur aushärtet, dadurch gekennzeichnet, daß man dem Vorkondensat 1 bis 20 Gew.-% Alkalidisulfit, Alkalisulfoxilat, Alkaliformaldehydsulfoxilat, Alkaliamidosulfonat, Alkaliphosphate und/oder Alkalipolyphosphate, bezogen auf den Feststoffgehalt, zusetzt, die wäßrige Vorkondensatlösung in eine Atmosphäre von 100 bis 130°C zu Fäden verspinnt und diese 0,5 bis 120 min mit Hilfe heißer Luft, überhitztem Wasserdampf oder Gemischen aus beiden auf Temperaturen von 120 bis 250°C erhitzt.

Das neue Verfahren hat den Vorteil, daß sich die Melamin-Formaldehydvorkondensate ohne Zusatz von Vinylpolymeren ohne nachteilige Folgen schneller verspinnen lassen. Weiter hat das neue Verfahren den Vorteil, daß die Wasserverträglichkeit der Vorkondensate verbessert wird, d. h. daß man höhere Kondensationsgrade erzielt. Ferner hat das neue Verfahren den Vorteil, daß die Viskosität leichter zu regeln ist und die Reaktivität erhöht wird. Schließlich hat das neue Verfahren den Vorteil, daß die ersponnenen Fäden und Fasern eine verbesserte Wasseraufname Fähigkeit aufweisen.

Erfindugsgemäß geht man von 65 bis 85 gew.-%-igen wäßrigen Lösugen eines Vorkondensats aus, das zu mindestens 80 % aus Melamin und Formaldehyd im Molverhältnis Melamin : Formaldehyd von 1 : 1,5 bis 1 : 4 aufgebaut ist. Zusätzlich können diese Vorkondensate bis zu 20 Gew.-% andere amino-, amid-, hydroxyl- oder carboxylgruppenhaltige Duroplastbildner einerseits und Aldehyde andererseits einkondensiert enthalten. Als Duroplastbildner kommen beispielsweise in Frage alkylsubstituiertes Melamin, Harnstoff, Urethane, Carbonsäureamide, Dicyandiamid, Guanidin, Sulfurylamid, Sulfonsäureamide, aliphatische Amine, Phenol und dessen Derivate. Als Aldehyde können z. B. Acetaldehyd, Trimethylolacetaldehyd, Acrolein, Benzaldehyd, Furfurol, Glyoxal, Phthalaldehyd und Terephthalaldehyd verwendet werden. Weitere Einzelheiten über Melaminformaldehydkondensationsprodukte finden sich in Houben-Weyl, Methoden der Organischen Chemie, Band 14/2, 1963, Seiten 319 bis 402.

Bevorzugt enthalten die Vorkondensate zusätzlich Alkanale mit 2 bis 4 Kohlenstoffatomen wie Acetaldehyd, Propionaldehyd oder Butyraldehyd, ferner Guanidin, N-alkylsubstituierte Melamine oder N-alkylsubstituierte Guanidine. Bei den N-alkylsubstituierten Ausgangsstoffen ist es wesentlich, daß sie noch mit Aldehyden reaktionsfähig sind. Als Paraformaldehyd oder Trioxan geeignet. Besonders bevorzugt geht man von Vorkondensaten aus, die zu 100 Gew.-% aus Melamin und Formaldehyd aufgebaut sind.

Geeignet Vorkondensate erhält man beispielsweise, indem man Melamin und Formaldehyd in Form einer wäßrigen Lösung im Molverhältnis 1 : 1,5 bis 4, insbesondere 1,8 bis 3,5 umsetzt. Die Umsetzung erfolgt vorteilhaft bei einer Temperatur von 70 bis 105°C. In der Regel führt man die Umsetzung in Gegenwart von alkalischen Katalysatoren wie Natriumhydroxid oder Natriumcarbonat bei einem pH-Wert von 7 bis 10 durch. Falls man ein kontinuierliches Verfahren wählt, haben sich pH-Werte von 7 bis 9 bewährt, während bei absatzweisen Arbeitsweise pH-Werte von 8 bis 9,5 bevorzugt werden. Vorteilhaft wird der Kondensationsgrad des wäßrigen Vorkondensats so gewählt, daß der oberhalb der Knickstelle der ersten Ableitung der Kurve liegt, die man erhält, wenn man unter Konstanthaltung der Temperatur die Viskosität der Mischung in Abhängikeit der Reaktionszeit laufend bestimmt und in einen $\eta$ ($+$)-Diagramm aufträgt.

Ein wesentliches Merkmal der Erfindung ist es, daß man der wäßrigen Vorkondensatlösung Alkalidisulfit, Alkalisulfoxilat, Alkalki-Formaldehydsulfoxilat, Alkaliamidosulfonat, Alkaliphosphat oder Alkalipolyphosphat zusetzt. In der Regel verwendet man die Natrium- oder Kaliumsalze. Die zugesetzte Menge beträgt 1 bis 20 Gew.-%, insbesondere 3 bis 15 Gew.-%, bezogen auf den Feststoffgehalt der wäßrigen Vorkondensatlösung. Besonders bewährt hat sich der Zusatz von Alkalidisulfit. Es wird angenommen, daß die genannten Salze mit dem Vorkondensat reagieren und dann an das Vorkondensat gebunden vorliegen.

Besonders bewährt hat es sich, wenn man bei der Herstellung der Vorkondensatlösung Formaldehyd zunächst mit weniger als der vorgesehenen Menge an Melamin, z. B. 60 bis 95 Gew.-% der vorgesehenen Menge Melamin, umsetzt, dann die vorgesehene Menge der vorgenannten Salze zusetzt und nach Erreichen des erwünschten Kondensationsgrades die restliche Menge an Melamin, die mindestens 5 Gew.-% der gesamten Melaminmenge darstellt, zusetzt und vorzugsweise bei einer Temperatur von 50 bis 90° C solange umsetzt, bis das feste Melamin in Lösung gegangen ist und anschließend die Lösung abkühlt.

Der wäßrigen Lösung des Vorkondensats wird in der Regel noch ein Härter bzw. ein Härtergemisch in einer Menge von 0,5 bis 10, vorzugsweise 1,5 bis 5 Gew.-%, bezogen auf den Feststoffgehalt, zugesetzt, um eine Beschleunigung der Härtung und Vernetzung zu erzielen. Als Härter kommen anorganische und organische Säuren, wie Salzsäure, Schwefelsäure, Phosphorsäure, Ameisensäure, Essigsäure, Oxalsäure, Milchsäure, Weinsäure oder Aminosäuren in Betracht. Geeignet sind auch latente Härter, wie Salze von Halogencarbonsäuren, Chloressigsäureamid, Hydrogenphosphate, saure Anhydride und Ammoniunsalze, ferner Alkylarylammoniumsalze. Allgemein sind alle Verbindungen, die bei Raumtemperatur oder erhöhten Temperaturen Protonen abspalten oder erzeugen geeignet. So kann z. B. auch Formaldehyd selbst bei höheren Temperaturen unter Bildung von Ameisensäure disproportionieren und so als Härter wirken.

Die Vorkondensatlösung wird vor dem Verspinnen vorteilhaft bei einer Temperatur von 30 bis 50° C, z. B. für einen Zeitraum von 1 bis 5 Stunden gealtert, um die Gasblasen zu entfernen.

Die wäßrige Lösung des Vorkondensats wird in eine erhitzte Atmosphäre versponnen, das Wasser verdampft und das Vorkondensat aus gehärtet. Vorzugsweise verspinnt man das Vorkondensat in eine Atmosphäre von 100 bis 130° C, z. B. Luft oder Stickstoff zu Fäden mit einem Wassergehalt von 2 bis 8 Gew.-%, insbesondere 3 bis 6 Gew.%. Die so erhaltenen Fäden werden anschließend vorteilhaft bei einer Temperatur von 120 bis 250° C für einen Zeitraum von 0,5 bis 120 Minuten mit Hilfe heißer Luft, überhitztem Wasserdampf oder Gemischen derselben ausgehärtet. Die Spinngeschwindigkeit beträgt z. B. 80 bis 110 m/min. Die Aushärtung wird vorteilhaft solange fortgesetzt, bis das Intensitätsverhältnis der Infrarotabsorbtionsbanden der Formel

$$\frac{I_{(950 - 1050\ cm^{-1})}}{I_{(ca.\ 810\ cm^{-1})}} = \frac{0{,}5}{\frac{F}{M}} \cdot \frac{I_o\ (950\ bis\ 1050\ cm^{-1})}{I_o\ (ca.\ 810\ cm^{-1})}$$

entspricht, wobei $I_o$ die Intensität der Infrarotabsorptionsbanden vor und $I$ die Intensität der Infrarotabsorptionsbanden nach der Wärmebehandlung bezeichnen und F durch M für das Molverhältnis von Formaldehyd : Melamin steht.

Die nach dem Verfahren der Erfindung erhältlichen Fäden und Fasern brennen nicht, schmelzen nicht, nehmen relativ viel Wasser auf (ca. 9 Gew.-% bei 20° C und 65 % relative Feuchte) und weisen eine relativ hohe Bruchdehnung (10 bis 20 %) auf, weshalb sie sich zur Herstellung von flächigen Gebilden, z. B. Geweben, Gewirken oder Vliesen für Papiere als Asbestersatz, als Verstärkungsmittel in polymeren Massen oder als Vorläufer für Kohlenstoffäden eignen.

Das Verfahren nach der Erfindung sei an folgendem Beispiel veranschaulicht.

**Beispiel**

a) Herstellung der Vorkondensatlösung

Formaldehyd 50 gew.-%-ig in Wasser wird mit Melamin im Molverhältnis 22 : 1 bei 50° C durch Rühren vermischt. 2366 g dieses Gemisches (1,6 Mol Melanin und 36 Mol Formaldehyd) werden unter Zusatz von 259 g (10 Gew.-%, bezogen auf den Feststoffgehalt) Natriumdisulfit und 1306 g Melamin (10,4 Mol) unter Rühren auf 95° C erhitzt. Durch Zugabe von Natronlauge wird ein pH-Wert von 8,5 aufrechterhalten. Unter Rühren wird die Reaktion so lange fortgesetzt, bis eine Viskosität von 700 dPas (gemessen bei 25°) erreicht ist. Danach setzt man weitere 504 g Melamin (4 Mol) zu und hält das Reaktionsgemisch gerade so lange auf Temperatur, bis eine klare Lösung vorliegt. Dann wird zügig abgekühlt. Das Harz hat bei 25° C eine Endviskosität von 3500 dPas.

b) Entgasen der Spinnlösung

3

Die gemäß a) erhaltene wäßrige Vorkondensatlösung wird in einem verschlossenen Gefäß ca. 3 Stunden bei 50°C gehalten und dann in das gleichfalls auf 50°C erwärmte Spinnvorratsgefäß gefüllt. Anschließend wird das gefüllte Spinnvorratsgefäß langsam auf Zimmertemperatur abgekühlt. Die Spinnlösung enthält ca. 75 Gew.-% Vorkondensat und 25 Gew.-% Wasser.

### c) Verspinnen

Die gemäß b) erhaltene Spinnlösung wird aus dem Vorratsgfäß mittels einer Spinnpumpe durch eine Düse mit 10 Löchern von jeweils 0,1 mm Durchmesser in einem Trockenspinnschacht versponnen. Durch den Trockenspinnschacht wird Luft mit einer Geschwindigkeit von 0,05 m/sec und einer Temperatur von 105 bis 110°C geleitet. Der Durchsatz beträgt 2,5 g/min und die Spinngeschwindigkeit 90 m/min. Die ersponnenen Fäden haben einen Einzelfadendurchmesser von 31 μm und einen Wassergehalt von 5 Gew.-%.

### d) Aushärten der Fäden

Die frisch gesponnenen Fäden, die auf Spulen aufgewickelt sind, werden in 45 min mit trockener Heißluft auf 230°C erhitzt und 10 min bei dieser Temperatur belassen und anschließend innerhalb von 1 bis 10 min auf Zimmertemperatur abgekühlt. Hierdurch werden die Fäden aus kondensiert und vernetzt. Die Eigenschaften der aus gehärteten Fäden sind wie folgt:

| | |
|---|---|
| Titer | 10 dtex |
| Reißfestigkeit | 2 cN/dtex |
| Bruchdehnung | 20 % |
| Durchmesser | ungefähr 25 μm |
| Dichte | 1,5 g/cm$^3$ |
| Wasseraufnahme bei 65 % relativer Feuchte: | 9 Gew.-% |
| Wass eraufnahme bei 100 % relativer Feuchte: | 15 Gew.-% |
| Farbe: | farblos |

Die Fäden haben keinen Schmelzpunkt und sind nicht brennbar.
LOI-Wert größer 30.
Der LOI-Wert gibt die Vol-% $O_2$ eines $O_2/N_2$-Gemisches an, in dem eine Probe der zu prüfenden Substanz nach Beflammen und Entfernen der Flamme weiterbrennt.

## Patentansprüche

1. Verfahren zur Herstellung von nicht brennenden und nicht schmelzenden Fäden und Fasern mit hoher Bruchdehnung, die mindestens zu 80 Gew.-% aus Melamin-Formaldehydkondensaten bestehen, wobei man eine 65 bis 85 gew.-%-ige wäßrige Lösung eines Vorkondensats, das mindestens zu 80 Gew.-% aus Melamin und Formaldehyd im Molverhältnis Melamin : Formaldehyd von 1 : 1,5 bis 1 : 4 aufgebaut ist und zusätzlich bis zu 20 Gew.-% andere amino-, amid-, hydroxyl- oder carboxylgruppenhaltige Duroplastbildner einerseits und Aldehyde andererseits einkondensiert enthalten kann, in eine erhitzte Atmosphäre verspinnt, das Wasser verdampft und das Vorkondensat bei erhöhter Temperatur aushärtet, dadurch gekennzeichnet, daß man dem Vorkondensat 1 bis 20 Gew.-% Alkalidisulfit, Alkalisulfoxilat, Alkaliformaldehydsulfoxilat, Alkaliamidosulfonat, Alkaliphosphate und/oder Alkalipolyphosphat, bezogen auf den Feststoffgehalt des Vorkondensats zusetzt, die wäßrige Vorkondensatlösung in eine Atmosphäre von 100 bis 130°C zu Fäden verspinnt und diese 0,5 bis 120 min mit Hilfe heißer Luft, überhitztem Wasserdampf oder Gemischen aus beiden auf Temperaturen von 120 bis 250°C erhitzt.

2. Verfahren nach den Ansprüchen 1 und 2, dadurch gekennzeichnet, daß die Aushärtung bei erhöhter Temperatur solange fortgesetzt wird, bis das Intensitätsverhältnis der Infrarotabsorptionsbanden folgender Formel

$$\frac{I_{(950 - 1050 \text{ cm}^{-1})}}{I_{(\text{ca. } 810 \text{ cm}^{-1})}} = \frac{0,5}{\frac{F}{M}} \cdot \frac{I_o \, (950 \text{ bis } 1050 \text{ cm}^{-1})}{I_o \, (\text{ca. } 810 \text{ cm}^{-1})}$$

entspricht, wobei $I_o$ die Intensität der Infrarotabsorptionsbanden vor und I die Intensität der Infrarotabsorptionsbanden nach der Wärmebehandlung bezeichnen und F durch M für das Molverhältnis von Formaldehyd : Melamin steht.

3. Verfahren nach den Ansprüchen 1 bis 2, dadurch gekennzeichnet, daß man von einer wäßrigen Lösung ausgeht, die durch Umsetzen von Formaldehyd mit weniger als der vorgesehenen Menge Melamin, anschließende Zugabe von Alkalidisulfit, Alkalisulfoxilat, Alkali-Formaldehydsulfoxilat, Alkaliamidosulfonat, Alkaliphosphaten und/oder Alkalipolyphosphaten und nach Erreichen des erwünschten Kondensationsgrades der restlichen Menge an Melamin, die mindestens 5 Gew.-% der gesamten Melaminmenge darstellt, erhalten worden ist und die Umsetzung solange fortsetzt, bis das feste Melamin in Lösung gegangen ist und danach abkühlt.

4. Verfahren nach den Ansprüchen 1 bis 4, dadurch gekennzeichnet, daß der Kondensationsgrad des wäßrigen Vorkondensats so gewählt wird, daß er oberhalb der Knickstelle der ersten Ableitung der Kurve liegt, die man erhält, wenn unter Konstanthalten der Temperatur die Viskosität der Mischung in Abhängigkeit der Reaktionszeit laufend bestimmt und in einem $\eta$ (+)-Diagramm aufträgt.

## Claims

1. A process for producing noncombustible and nonfusible filaments and fibers of high elongation at break which are not less than 80 % by height melamine-formaldehyde condensates by spinning a from 65 to 85 % strength by height aqueous solution of a precondensate which is not less than 80 % by height melamine and formaldehyde in a molar ratio of melamine : formaldehyde of from 1 : 1.5 to 1 : 4 and can in addition contain up to 20 % by height of other amino-, amido-, hydroxyl- or carboxyl-containing thermoset formers on the one hand and aldehydes on the other as cocondensed units into a hot atmosphere, evaporating the water and curing the precondensate at elevated temperatures, which comprises adding to the precondensate from 1 to 20 % by weight of an alkali metal disulfite, alkali metal sulfoxilate, alkali metal formaldehydesulfoxilate, alkali metal sulfanate, alkali metal phosphate and/or alkali metal polyphosphate, based on the solids content of the precondensate, spinning the aqueous precondensate solution into filaments in an atmosphere of from 100 to 130°C, and heating these filaments to 120 to 250°C for from 0.5 to 120 min by means of hot air, superheated steam or a mixture thereof.

2. A process as claimed in claim 1, wherein the curing is continued at elevated temperatures until the intensity ratio of the infrared absorption bands conforms to the formula

$$\frac{I_{(950\ -\ 1050\ \text{cm}^{-1})}}{I_{(\text{ca.}\ 810\ \text{cm}^{-1})}} = \frac{0.5}{\frac{F}{M}} \times \frac{I_o\ (950\ \text{to}\ 1050\ \text{cm}^{-1})}{I_o\ (\text{ca.}\ 810\ \text{cm}^{-1})}$$

where $I_o$ is the intensity of the infrared absorption bands before and I the intensity of the infrared absorption bands after the heat treatment and F divided by M is the molar ratio of formaldehyde : melamine.

3. A process as claimed in claim 1 or 2, wherein the starting point is an aqueous solution which has been obtained by reacting formaldehyde with less than the proposed amount of melamine and subsequently adding an alkali metal disulfite, alkali metal sulfoxilate, alkali metal formaldehydesulfoxilate, alkali metal sulfanate, alkali metal phosphate and/or alkali metal polyphosphate and, after the desired degree of condensation has been reached, the melamine remainder, which is not less than 5 % by weight of the total amount of melamine, and the reaction is continued until the solid melamine has gone into solution and cooled down.

4. A process as claimed in claim 1 or 2 or 3, wherein the degree of condensation of the aqueous precondensate is chosen to be above the break point of the first derivative of the curve obtained when, while the temperature is kept constant, the viscosity of the mixture is uninteruptedly determined as a function of the reaction time and plotted in an $\eta$ (+) diagram.

## Revendications

1. Procédé de production de fibres et de filaments incombustibles et infusibles, d'un allongement à la rupture élevé, composés à raison d'au moins 80 % en poids de produits de la condensation de la mélamine et du formaldéhyde, dans lequel on file une solution aqueuse, contenant entre 65 et 85 % en poids d'un précondensat composé à raison d'au moins 80 % en poids de mélamine et de formaldéhyde dans un rapport molaire de la mélamine au formaldéhyde compris entre 1 : 1,5 et 1 : 4 et dans lequel peuvent être condensés jusqu'à 20 % en poids d'autres formateurs de duroplastes à groupes amino, amide, hydroxyle ou carboxyle d'une part et d'aldéhydes d'autre part, dans une atmosphère chauffée, on vaporise l'eau et on réticule le précondensat à une température accrue, caractérisé en ce que l'on incorpore au précondensat entre 1 et 20 % en poids par rapport à sa teneur en matières solides de disulfite de métal alcalin, de sulfoxylate de métal alcalin, de formaldéhyde-sulfoxylate de métal alcalin, d'amido-sulfonate de métal alcalin, de phosphates de métal alcalin et(ou) de polyphosphate de métal alcalin, on transforme le précondensat en solution aqueuse dans une atmosphère chauffée entre 100 et 130°C en fils, qui sont ensuite chauffées pendant 0,5 à 120 minutes, par de l'air chaud ou de la vapeur surchauffée ou par un mélange de ceux-ci, à des températures comprises entre 120 et 250°C.

2. Procédé suivant les revendications 1 et 2 (lire: la revendication 1), caractérisé en ce que la réticulation à température accrue est poursuivie jusqu'au moment où le rapport des intensités des bandes d'absorption dans l'infra-rouge répond à la formule

$$\frac{I_{(950 - 1050 \text{ cm}^{-1})}}{I_{(\pm 810 \text{ cm}^{-1})}} = \frac{0,5}{\frac{F}{M}} \cdot \frac{I_0 \, (950 \text{ à } 1050 \text{ cm}^{-1})}{I_0 \, (\pm 810 \text{ cm}^{-1})} \quad ,$$

dans laquelle $I_0$ est l'intensité des bandes d'absorption dans l'infra-rouge avant et I celle après le traitement thermique et $\frac{F}{M}$ représente le rapport molaire du formaldéhyde F à la mélamine M.

3. Procédé suivant les revendications 1 à 3 (lire : 1 et 2), caractérisé en ce que l'on part d'une solution aqueuse obtenue par la réaction du formaldéhyde avec une proportion de mélamine inférieure à la proportion théorique, suivie de l'addition de disulfite de métal alcalin, de sulfoxylate de métal alcalin, de formaldéhyde-sulfoxylate de métal alcalin, d'amido-sulfate de métal alcalin, de phosphates et(ou) de polyphosphates de métaux alcalins et, lorsque le degré de condensation voulu est atteint, de celle de la quantité restante de mélamine, qui correspond à au moins 5 % du poids total de mélamine, et on poursuit la réaction jusqu'au moment où la mélamine solide est dissoute, puis on refroidit.

4. Procédé suivant les revendications 1 à 4 (lire : 1 à 3), caractérisé en ce que le degré de condensation du précondensat en solution aqueuse est choisi tel qu'il se situe au-dessus du point de brisure de la première déviation de la courbe que l'on obtient par la détermination en continu, à température constante, de la viscosité du mélange en fonction de la durée de la réaction et réalisation d'un diagramme $\eta$ (+).